(19) **Europäisches Patentamt**
**European Patent Office**
**Office européen des brevets**

(11) **EP 3 074 748 B1**

(12) **FASCICULE DE BREVET EUROPEEN**

(45) Date de publication et mention
de la délivrance du brevet:
**13.10.2021  Bulletin 2021/41**

(21) Numéro de dépôt: **14814954.5**

(22) Date de dépôt: **26.11.2014**

(51) Int Cl.:
*G01N 3/56* *(2006.01)*        *G01N 3/58* *(2006.01)*

(86) Numéro de dépôt international:
**PCT/FR2014/053036**

(87) Numéro de publication internationale:
**WO 2015/079164 (04.06.2015 Gazette 2015/22)**

(54) **PROCÉDÉ ET DISPOSITIF DE DÉTERMINATION DE L'USURE D'UNE FACE DE DÉPOUILLE D'UN OUTIL DE COUPE**

VERFAHREN UND VORRICHTUNG ZUR BESTIMMUNG DES VERSCHLEISSES EINER SCHNEIDWERKZEUGFLANKE

METHOD AND DEVICE FOR DETERMINING THE WEAR OF A CUTTING TOOL FLANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.11.2013  FR 1361840**
             **29.11.2013  FR 1361859**

(43) Date de publication de la demande:
**05.10.2016  Bulletin 2016/40**

(73) Titulaire: **Safran Aircraft Engines
75015 Paris (FR)**

(72) Inventeurs:
• **RANCIC, Mickael
  F-77550 Moissy-Cramayel Cedex (FR)**
• **BATISTA, Nicolas
  F-77550 Moissy-Cramayel Cedex (FR)**
• **HEBUTERNE, Damien
  F-77550 Moissy-Cramayel Cedex (FR)**

(74) Mandataire: **Cabinet Beau de Loménie
158, rue de l'Université
75340 Paris Cedex 07 (FR)**

(56) Documents cités:
• **GLASS K ET AL: "Real-time tool wear estimation using cutting force measurements", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, vol. 4, 22 avril 1996 (1996-04-22), pages 3067-3072, XP010163202, DOI: 10.1109/ROBOT.1996.509178 ISBN: 978-0-7803-2988-1**
• **YUNG-CHANG YEN ET AL: "Estimation of tool wear in orthogonal cutting using the finite element analysis", JOURNAL OF MATERIALS PROCESSING TECHNOLOGY, ELSEVIER, NL, vol. 146, no. 1, 1 janvier 2004 (2004-01-01), pages 82-91, XP007922769, ISSN: 0924-0136, DOI: 10.1016/S0924-0136(03)00847-1**
• **TANSEL I ET AL: "Tool wear estimation in micro-machining. Part I: tool usage-cutting force relationship", INTERNATIONAL JOURNAL OF MACHINE TOOLS AND MANUFACTURE, ELSEVIER, US, vol. 40, 1 janvier 2000 (2000-01-01), pages 599-608, XP007922770, ISSN: 0890-6955**
• **VISHAL S SHARMA ET AL: "Cutting tool wear estimation for turning", JOURNAL OF INTELLIGENT MANUFACTURING, KLUWER ACADEMIC PUBLISHERS, BO, vol. 19, no. 1, 3 juillet 2007 (2007-07-03), pages 99-108, XP019574899, ISSN: 1572-8145**

EP 3 074 748 B1

**(Cont. page suivante)**

- **GLASS K ET AL: "Real-time tool wear estimation using cutting force measurements", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, vol. 4, 22 April 1996 (1996-04-22), pages 3067-3072, XP010163202, DOI: 10.1109/ROBOT.1996.509178 ISBN: 978-0-7803-2988-1**
- **YUNG-CHANG YEN ET AL: "Estimation of tool wear in orthogonal cutting using the finite element analysis", JOURNAL OF MATERIALS PROCESSING TECHNOLOGY, ELSEVIER, NL, vol. 146, no. 1, 1 January 2004 (2004-01-01), pages 82-91, XP007922769, ISSN: 0924-0136, DOI: 10.1016/S0924-0136(03)00847-1**
- **TANSEL I ET AL: "Tool wear estimation in micro-machining. Part I: tool usage-cutting force relationship", INTERNATIONAL JOURNAL OF MACHINE TOOLS AND MANUFACTURE, ELSEVIER, AMSTERDAM, NL, vol. 40, 1 January 2000 (2000-01-01), pages 599-608, XP007922770, ISSN: 0890-6955, DOI: 10.1016/S0890-6955(99)00073-5**

**Description**

DOMAINE DE L'INVENTION

Le présent exposé concerne un procédé de détermination de l'usure d'une face de dépouille d'un outil de coupe et un dispositif permettant la mise en œuvre d'un tel procédé.

ARRIERE-PLAN

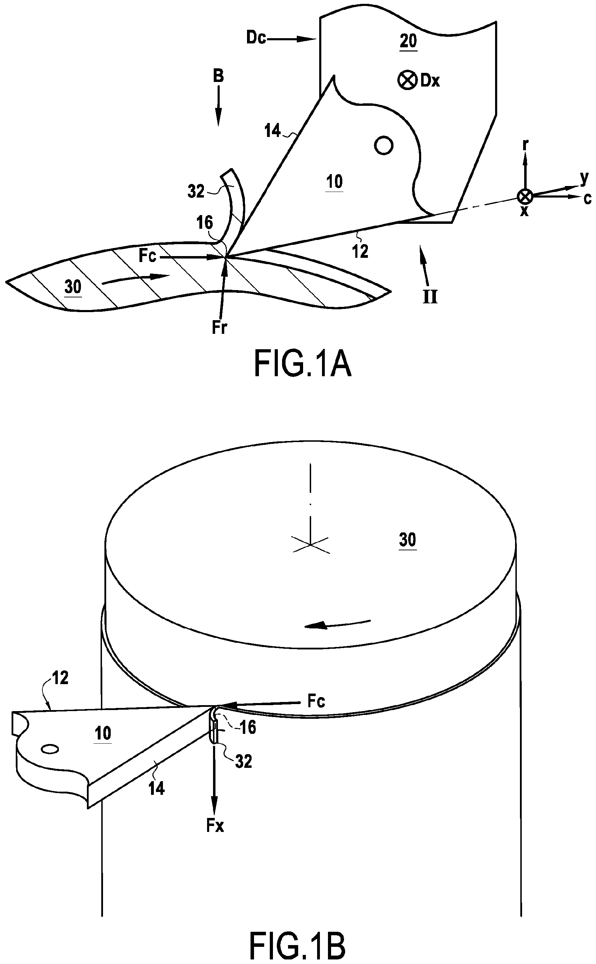

Lors de l'usinage d'une pièce par un outil de coupe, l'outil de coupe s'use progressivement. La figure 1A montre un exemple d'outil de coupe 10 monté sur une machine d'usinage 20 pour usiner une pièce 30. En l'occurrence, la pièce 30 est à symétrie de révolution et tourne autour de son axe tandis que la machine d'usinage se déplace selon un mouvement d'avance Dx dans la direction dudit axe pour parcourir l'ensemble de la pièce 30. La figure 1B montre une vue en perspective de la pièce 30 et de l'outil de coupe 10 selon la direction B de la figure 1A. La pièce 30 a donc, par rapport à l'outil de coupe 10, une trajectoire hélicoïdale caractérisée par une vitesse de coupe Vc et une avance par tour par dent fz (pas de l'hélice ; si f est l'avance globale par tour et Z le nombre de dents, on a f = fz x Z). Un autre paramètre de l'usinage souvent employé est la profondeur de passe ap (profondeur de matière retirée lors de la coupe).

De manière générale, lors de l'usinage d'une pièce par un outil de coupe, l'enlèvement de matière est réalisé par la conjonction de mouvements relatifs entre la pièce et l'outil de coupe : le mouvement de coupe Dc, dans la direction c duquel s'exerce l'effort de coupe Fc, et le mouvement d'avance Dx, dans la direction x duquel s'exerce l'effort d'avance Fx. L'effort radial Fr s'exerce dans une direction r perpendiculaire à la direction de coupe c et la direction d'avance x. Ces mouvements et efforts sont représentés sur les figures 1A et 1B. Dans le cas d'un tournage, où la pièce à usiner est sensiblement à symétrie de révolution et en rotation sur elle-même, comme c'est le cas sur l'exemple des figures 1A et 1B, la direction de coupe c et la direction d'avance x correspondent respectivement à une direction tangentielle et une direction axiale, et la direction r est une direction radiale.

Sur l'exemple représenté, l'outil de coupe 10 comporte une arête de coupe 16, une face de coupe 14 et une face de dépouille 12. La face de coupe 14 est la face le long de laquelle sont évacués des copeaux 32 issus de la coupe de la pièce 30. La face de dépouille 12 est la face située en regard de la surface usinée de la pièce 30. L'arête de coupe 16 se situe à l'intersection de la face de coupe 14 et de la face de dépouille 12. L'introduction de l'arête de coupe 16 dans la pièce 30 crée les copeaux 32.

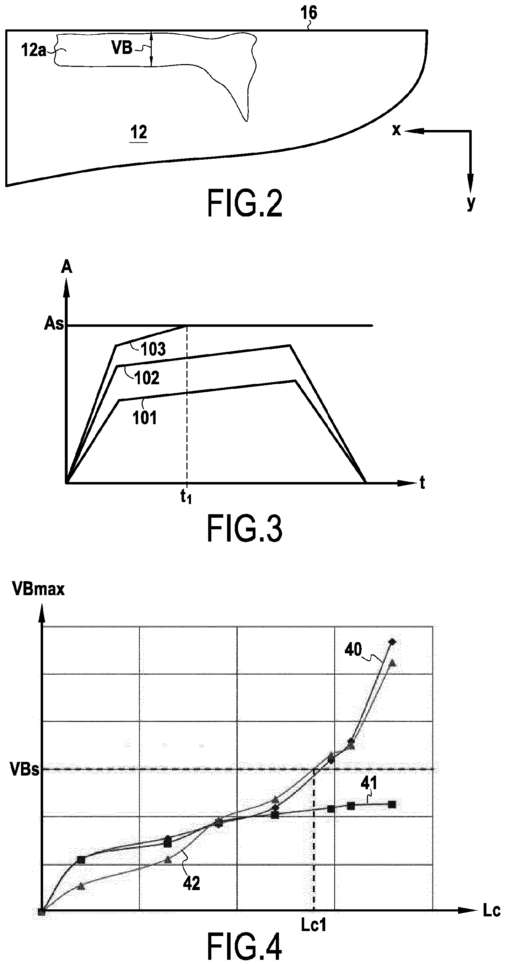

Comme on peut le voir sur la figure 2, représentant la face de dépouille 12 de l'outil de coupe 10 vue selon la direction II de la figure 1A, la face de dépouille 12 comporte une zone d'usure 12a qui apparaît et s'agrandit au fur et à mesure de l'utilisation de l'outil 10. L'usure de la face de dépouille 12 peut être essentiellement due aux contraintes thermomécaniques élevées résultant du frottement de la pièce 30 sur l'outil de coupe 10. La zone d'usure 12a de la face de dépouille revêt généralement la forme d'une bande striée brillante parallèle à l'arête de coupe.

En référence à la figure 2, on définit un axe des abscisses porté par la direction d'avance x et parallèle à l'arête de coupe 16 initiale, c'est-à-dire parallèle à l'arête de coupe 16 avant qu'elle ne subisse une quelconque usure. On définit également un axe des ordonnées y perpendiculaire à la direction d'avance x dans le plan de la face de dépouille 12. La zone d'usure 12a de la face de dépouille 12 peut être caractérisée, en chaque abscisse x, par une longueur caractéristique notée VB(x) (ou plus simplement VB) et appelée usure en dépouille. L'usure en dépouille VB est généralement mesurée en millimètres (mm). Comme indiqué sur la figure 2, l'usure en dépouille VB(x) est la distance, à abscisse x fixée, entre l'arête de coupe 16 initiale et le point de la zone d'usure 12a le plus éloigné de l'arête de coupe 16 initiale, mesurée dans la direction de l'axe des ordonnées.

A la place de la longueur caractéristique VB, il est connu de caractériser l'usure de la face de dépouille par la longueur caractéristique VBmax, appelée usure en dépouille maximale et calculée comme étant le maximum, sur toutes les abscisses x, de l'usure en dépouille VB(x). Afin d'éviter les effets de bord, l'usure en dépouille maximale peut n'être calculée que sur une partie centrale de la zone d'usure 12a de la face de dépouille. La détermination de l'étendue de ladite partie centrale peut être effectuée selon des critères normalisés et connus de l'homme du métier.

Lorsque l'usure d'un outil de coupe atteint un niveau trop important, l'outil de coupe peut se déformer, se fissurer ou encore s'écailler, ce qui entraîne l'insertion de bris dans la pièce usinée. Par ailleurs, l'endommagement d'un outil conduit à une augmentation des efforts et des vibrations lors de l'usinage, ce qui nuit à la qualité de la pièce usinée, c'est-à-dire ses caractéristiques géométriques, dimensionnelles, d'état de surface et d'intégrité matière. Il est donc primordial de surveiller l'outil de coupe et de le mettre au rebut lorsque son usure, et notamment son usure en dépouille, devient trop importante et dépasse un certain seuil appelé critère de rebut.

Pour déterminer si l'usure en dépouille d'un outil est trop importante, on connaît un procédé de surveillance de l'usure en dépouille à partir d'au moins une autre grandeur (ci-après grandeur observée A). De telles grandeurs peuvent inclure une puissance ou un effort exercé par l'outil de coupe sur la pièce. Dans le cas où la grandeur observée dépasse un seuil As, l'usinage est arrêté et l'outil de coupe doit être changé. Le seuil As doit être déterminé au préalable, lors d'une étape de prédétermination, en fonction des paramètres de l'usinage.

Un exemple d'un tel procédé est schématisé sur la figure 3, sur laquelle les courbes 101, 102, 103 représentent les évolutions respectives d'une grandeur observée A en fonction du temps d'usinage t, lors de plusieurs usinages successifs. Comme on peut le voir sur la courbe 101, la grandeur observée A augmente fortement au début d'un premier usinage (phase de pénétration de l'outil de coupe dans la pièce), puis augmente plus légèrement, et enfin décroît lorsque l'outil est retiré de la pièce et que le premier usinage prend fin. La courbe 102 représentant un deuxième usinage a sensiblement la même allure que la courbe 101 représentant le premier usinage, si ce n'est que la grandeur observée A atteint des valeurs plus élevées du fait de l'usure de l'outil de coupe. Pendant un troisième usinage, les valeurs atteintes par la grandeur observée A (dont l'évolution est représentée par la courbe 103) sont encore plus élevées, si bien qu'au cours du troisième usinage, la grandeur observée A atteint le seuil prédéterminé As et le troisième usinage est arrêté au temps t=t1.

Un inconvénient majeur d'un tel procédé est le temps requis par l'étape de prédétermination du seuil As de la grandeur observée A. En effet, dans la mesure où le critère de rebut est souvent exprimé par rapport à l'usure en dépouille, la détermination d'un seuil As nécessite d'établir une correspondance empirique entre l'usure en dépouille et la grandeur observée A, ce qui requiert un grand nombre d'usinages.

Par ailleurs, tandis que l'usure en dépouille de l'outil est une grandeur intrinsèque à l'outil, la grandeur observée A, telle qu'un effort ou une puissance, dépend également de la pièce usinée, notamment de son matériau, de la vitesse de coupe et de tous les paramètres d'usinage. Dans un tel procédé, la prédétermination d'un seuil doit donc être refaite intégralement pour chaque opération d'usinage et chaque changement de paramètre.

En outre, lorsque la grandeur observée A atteint le seuil prédéterminé As, on procède au changement d'outil mais la valeur de l'usure en dépouille de l'outil n'est pas connue pour autant. Par exemple, l'outil peut avoir subi une usure prématurée, si bien que la grandeur observée atteint son seuil bien après que l'usure en dépouille a atteint un critère de rebut. Dans un tel cas, l'outil ayant été utilisé au-delà de son critère de rebut, la qualité des pièces usinées pourrait ne pas convenir au cahier des charges de la fabrication.

Il existe donc un besoin pour un nouveau type de procédé de détermination de l'usure d'un outil de coupe.

PRESENTATION DE L'INVENTION

Le présent exposé concerne un procédé de détermination de l'usure d'une face de dépouille d'un outil de coupe, dans lequel ladite usure est déterminée au moyen d'une fonction générale calculant une longueur caractéristique de ladite usure en fonction d'au moins une variable représentative des conditions opératoires d'un usinage effectué par l'outil de coupe, et comprenant les étapes de :

- calcul d'une première valeur de ladite longueur caractéristique par une première fonction ;
- calcul d'une deuxième valeur de ladite longueur caractéristique par une deuxième fonction ;
- calcul de ladite fonction générale comme maximum de ladite première valeur et de ladite deuxième valeur.

Par exemple, la longueur caractéristique de ladite usure peut être l'usure en dépouille VB ou l'usure en dépouille maximale VBmax telles que précédemment définies. Les variables représentatives des conditions opératoires d'un usinage peuvent être des variables dépendant du temps et peuvent être choisies parmi, entre autres exemples, le temps lui-même, la longueur de coupe observée, une autre variable représentative de l'avancement de l'usinage au cours du temps, ou bien un effort exercé par l'outil sur la pièce, une énergie, une puissance, ou un couple. Ainsi, le procédé proposé permet de surveiller l'évolution de la longueur caractéristique en fonction de l'évolution de grandeurs obtenues pendant l'usinage. En outre, la fonction générale peut être intégrée à une chaîne de calculs plus longue, de sorte que ladite longueur caractéristique ne soit qu'une grandeur intermédiaire dans la détermination d'une autre grandeur.

Les variables représentatives des conditions opératoires d'un usinage peuvent également être des variables dont l'évolution est prédéterminée, par exemple la longueur de coupe (prévue et non observée) ou encore la longueur usinée Lu, le diamètre de coupe Dc, la vitesse d'avance Vf et les grandeurs qui sont liées à celles-ci. Dans ce cas, le procédé proposé permet de déterminer de manière prédictive l'évolution de la longueur caractéristique de l'usure en dépouille en fonction des conditions d'usinage prévues. A la différence des modèles de type Taylor ou Gilbert qui permettent de déterminer le temps d'usinage correspondant à une usure en dépouille donnée et nécessitent la réévaluation des constantes du modèle pour une usure en dépouille différente, le procédé selon l'invention fournit la longueur caractéristique de l'usure pour toutes les valeurs de ladite variable représentative, par exemple pour toutes les valeurs de la longueur de coupe, c'est-à-dire grâce à une fonction générale donnée.

Dans tous les cas, le procédé proposé dans le présent exposé permet de déterminer directement l'usure de la face de dépouille de l'outil en calculant une longueur caractéristique de ladite usure. Le procédé calcule donc une grandeur qui est intrinsèque à l'outil, ce qui évite de passer par une autre grandeur et de déterminer un seuil pour cette autre grandeur, lequel seuil ne serait valable que pour une pièce et un jeu de paramètres d'usinage. Par ailleurs, ladite longueur caractéristique, notamment l'usure en dépouille VB, fournit une mesure directe de l'usure de la face de dépouille de l'outil. L'usure de la face de dépouille est donc connue et peut être comparée directement à un critère de rebut intrinsèque à l'outil.

En outre, dans de tels modes de réalisation, on emploie deux fonctions différentes pour mieux modéliser l'évolution de la longueur caractéristique en fonction de la variable dépendant du temps. La fonction générale est alors le maximum de la première fonction et de la deuxième fonction, ce qui a l'avantage d'être conservatif : l'usure de la face de dépouille n'est ainsi jamais sous-estimée, et on ne prend pas le risque de considérer comme sain un outil dont l'usure de la face de dépouille a en fait dépassé le critère de rebut.

Dans certains modes de réalisation, la détermination de ladite usure est effectuée en temps réel. L'usure est donc déterminée sans attente, au fur et à mesure du calcul effectué par la fonction générale pendant l'usinage effectué par l'outil. La détermination en temps réel peut fournir une valeur de la longueur caractéristique à tout instant et dès que cette valeur est disponible. Ainsi, le procédé de détermination, utilisé à des fins de surveillance, permet de connaître en temps réel l'usure de l'outil et, le cas échéant, de prendre en temps réel les mesures adéquates en fonction de cette usure, par exemple arrêter l'usinage si la longueur caractéristique dépasse un critère de rebut.

Dans certains modes de réalisation, ladite fonction générale dépend de constantes déterminées par des essais d'usinage. Plus particulièrement, dans certains modes de réalisation, la première fonction et/ou la deuxième fonction dépend de constantes déterminées par des essais d'usinage. Une telle fonction, dépendant à la fois de constantes déterminées par des essais d'usinage et de variables, est parfois appelée fonction semi-empirique. Ainsi, même si des essais d'usinage sont nécessaires pour étalonner la fonction, beaucoup moins d'essais sont nécessaires que dans les procédés de l'art antérieur et la fonction obtenue reste valable pour plusieurs jeux de paramètres.

Dans certains modes de réalisation, la longueur caractéristique de l'usure de la face de dépouille est calculée en fonction de la vitesse de coupe (Vc), l'avance par tour par dent (fz), la profondeur de passe (ap), l'énergie de coupe (Ec) et l'effort radial (Fr). Ces variables sont bien connues de l'homme du métier. On rappelle que l'énergie associée à un effort est liée au travail dudit effort. En outre, la dépendance à l'énergie de coupe peut se présenter sous la forme d'une dépendance à l'énergie de coupe cumulée, comme il sera détaillé par la suite.

Parmi les variables précitées, l'effort radial Fr exercé par l'outil de coupe sur la pièce et l'énergie de coupe Ec dépendent toujours du temps, au sens où ils varient d'un instant à l'autre. Selon les cas, les autres variables peuvent ou non dépendre du temps. En effet, certains paramètres parmi la vitesse de coupe Vc, l'avance par tour par dent fz et la profondeur de passe ap sont généralement fixés comme consignes, mais ces consignes peuvent être constantes ou varier en fonction du temps.

Dans de tels modes de réalisation, la fonction générale n'utilise que des variables qui sont soit connues par la machine d'usinage, soit facilement accessibles à l'aide de moyens de mesure classiques. Une telle fonction générale est donc particulièrement simple à calculer sans nécessiter de changement majeur de l'instrumentation de la machine d'usinage.

Comme indiqué précédemment, dans certains modes de réalisation, la variable représentative des conditions opératoires d'un usinage effectué par l'outil de coupe est une variable dépendant du temps. Dans certains autres modes de réalisation, la variable représentative des conditions opératoires d'un usinage effectué par l'outil de coupe est une variable prédéterminée, c'est-à-dire une variable dont l'évolution ou au moins une valeur future est connue en fonction du résultat d'usinage souhaité.

Par exemple, la longueur de coupe peut être sélectionnée comme variable représentative dans les deux cas. Dans le premier cas, la longueur de coupe comme variable dépendant du temps est la longueur de coupe effectivement observée pendant l'usinage ; le procédé est donc utilisé comme un procédé de surveillance. Dans le second cas, la longueur de coupe comme variable prédéterminée est la valeur de la longueur de coupe nécessaire fixée par les besoins de l'usinage pour obtenir le résultat souhaité. Cette valeur est connue avant que l'usinage ne soit effectué, elle est à ce titre prédéterminée ; le procédé est alors utilisé comme un procédé de prédiction, permettant de prédire une longueur caractéristique de l'usure en dépouille en fonction de la variable prédéterminée, ici la longueur de coupe.

Dans certains modes de réalisation, la première fonction dépend du temps t et la première fonction est de la forme :

$$f1(Vc, fz, Ec, t) = 10^{A1}Vc^{B1}fz^{C1}Ecc^{D1}$$

où Vc est la vitesse de coupe, fz l'avance par tour par dent, Ecc l'énergie de coupe cumulée et A1, B1, C1, D1 quatre constantes. L'énergie de coupe cumulée désigne le cumul de l'énergie de coupe pendant l'usinage, plus précisément :

$$Ecc(t) = \int_{t0}^{t} Ec(u)\,du$$

où t0 est l'instant de début d'usinage et t l'instant courant. Les constantes A1, B1, C1, D1 peuvent être, par exemple, déterminées lors d'essais d'usinage.

Une première fonction de la forme précitée est particulièrement avantageuse pour modéliser certaines phases de l'évolution de l'usure de la face de dépouille.

Dans certains modes de réalisation, la deuxième fonction dépend du temps t et la deuxième fonction est de la forme :

$$f2(Vc, fz, Fr, t) = 10^{A2} 10^{[B2 + C2 \log(fz) + D2 \log(Vc)]} . \log(Frc)$$

où Vc est la vitesse de coupe, fz l'avance par tour par dent, Frc l'effort radial cumulé et A2, B2, C2, D2 quatre constantes. L'effort radial cumulé désigne le cumul de l'effort radial pendant l'usinage, plus précisément :

$$Frc(t) = \int_{t0}^{t} Fr(u) du$$

où t0 est l'instant de début d'usinage et t l'instant courant. Les constantes A2, B2, C2, D2 peuvent être, par exemple, déterminées lors d'essais d'usinage.

Une deuxième fonction de la forme précitée est particulièrement avantageuse pour modéliser certaines phases de l'évolution de l'usure de la face de dépouille, notamment d'autres phases que celles déjà bien modélisées par la première fonction.

Dans certains modes de réalisation, la première fonction dépend de la longueur de coupe Lc et la première fonction est de la forme :

$$f1(Vc, fz, Lc) = 10^{A1} Vc^{B1} fz^{C1} Lc^{D1}$$

où Vc est la vitesse de coupe, fz l'avance par tour par dent, Lc la longueur de coupe et A1, B1, C1, D1 quatre constantes. Les constantes A1, B1, C1, D1 peuvent être, par exemple, déterminées lors d'essais d'usinage. Si on donne à la longueur de coupe une valeur prédite et non dépendant du temps, aucune des variables ne dépend du temps ni de grandeurs mesurées pendant l'usinage. Ainsi, une première fonction de la forme précitée est particulièrement avantageuse pour modéliser prédictivement certaines phases de l'évolution de l'usure de la face de dépouille. En outre, la modélisation prédictive permet de créer, en peu d'essais, des abaques d'iso-usure en dépouille de la pièce en fonction de l'ensemble de ces paramètres. Connaissant le critère de rebut et la valeur de longueur de coupe Lc souhaitée, il est ensuite possible de choisir les conditions de coupe les plus efficaces tout en ne dépassant pas le critère de rebut. Ceci peut notamment permettre de raccourcir le temps d'usinage.

Dans certains modes de réalisation, en particulier en tournage, la première fonction prend en compte en outre la profondeur de passe ap, par exemple en multipliant la forme précitée pour la première fonction f1 par la profondeur de passe à une certaine puissance (f1 x ap$^{E1}$).

Le présent exposé concerne également un programme d'ordinateur comportant des instructions pour l'exécution des étapes du procédé de détermination décrit précédemment lorsque ledit programme est exécuté par un ordinateur.

Le présent exposé concerne également un support d'enregistrement lisible par un ordinateur sur lequel est enregistré un programme d'ordinateur comprenant des instructions pour l'exécution des étapes du procédé de détermination décrit précédemment.

Le présent exposé concerne également un dispositif de détermination de l'usure d'une face de dépouille d'un outil de coupe pour l'usinage d'une pièce, comprenant des moyens de détermination d'une longueur caractéristique de ladite usure, lesdits moyens de détermination prenant en compte au moins une variable représentative des conditions opératoires d'un usinage effectué par l'outil de coupe, et lesdits moyens de détermination étant configurés pour :

- calculer une première valeur de ladite longueur caractéristique par une première fonction ;
- calculer une deuxième valeur de ladite longueur caractéristique par une deuxième fonction ;
- calculer ladite longueur caractéristique comme maximum de ladite première valeur et de ladite deuxième valeur.

Dans certains modes de réalisation, le dispositif de détermination comprend des moyens de mesure, en fonction du temps, de l'énergie de coupe de l'outil ou de l'effort radial exercé par l'outil sur la pièce. Les moyens de mesure peuvent être aptes à effectuer des mesures instantanées.

Le présent exposé concerne également un procédé de détermination de l'usure d'une face de dépouille d'un outil de coupe, dans lequel ladite usure est déterminée au moyen d'une fonction générale explicite prédéterminée calculant une longueur caractéristique de ladite usure en fonction d'au moins une variable représentative des conditions opératoires d'un usinage effectué par l'outil de coupe. La fonction générale est explicite, c'est-à-dire qu'elle prend la forme d'une expression mathématique donnant directement la longueur caractéristique en fonction d'autres variables, par opposition notamment aux fonctions implicites, n'ayant pas d'expression directe et/ou nécessitant une résolution numérique. La fonction générale est prédéterminée, c'est-à-dire qu'elle est de forme connue à l'avance, par opposition aux interpolations ou aux systèmes de type réseau de neurones artificiels. Ainsi, la fonction générale explicite prédéterminée présente l'avantage d'être robuste, rapide et facile à mettre en œuvre et de ne pas nécessiter de phase d'apprentissage ni de moyens de résolution sophistiqués. En outre, même si la fonction générale explicite prédéterminée dépend de constantes déterminées par des essais d'usinage, il suffit de quelques essais pour déterminer ces constantes (de l'ordre de la dizaine d'essais), ce qui reste bien inférieur au nombre d'essais requis pour constituer une base d'apprentissage de réseau de neurones artificiels (plusieurs centaines d'essais). De surcroît, les essais nécessaires peuvent être optimisés grâce à l'emploi de la méthode Taguchi.

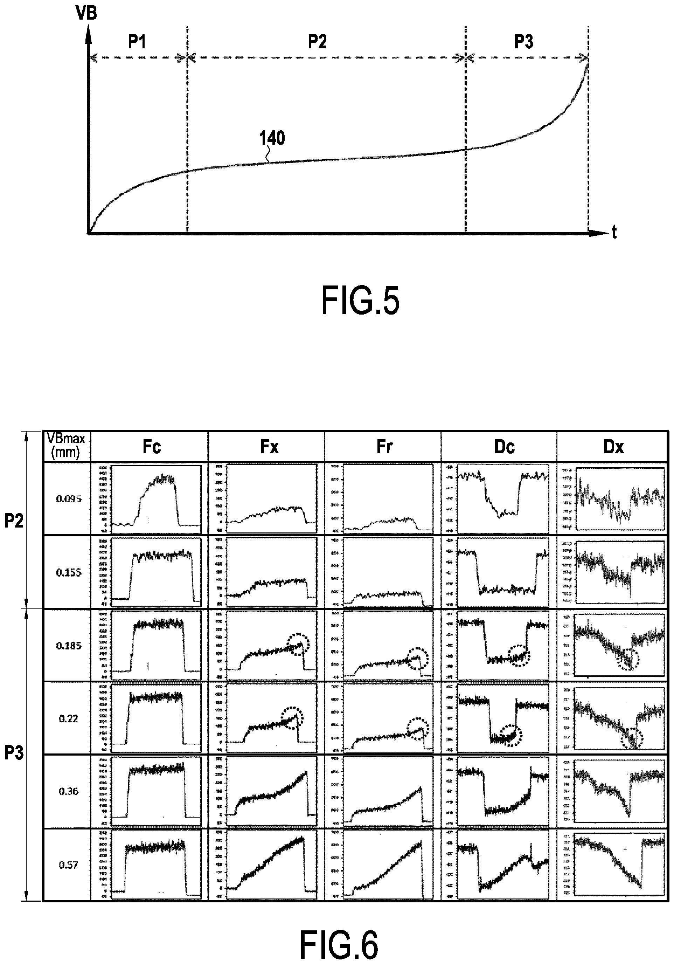

Par ailleurs, on sait d'expérience que l'usure en dépouille VB d'un outil de coupe évolue, en fonction du temps de coupe t, selon l'allure schématisée sur la figure 5. Sur la courbe 140, on distingue trois phases successives de l'évolution de l'usure en dépouille VB. Lors d'une première phase P1, la courbe 140 est sensiblement concave et l'usure en dépouille augmente fortement. Cette première phase P1, appelée phase d'initiation, correspond au rodage de l'outil de coupe. Ensuite, l'usure en dépouille VB entre dans une deuxième phase P2, appelée phase linéaire, où elle suit une croissance sensiblement linéaire et moins forte que lors de la première phase P1. Enfin, dans une troisième phase P3, l'usure en dépouille entre dans une phase connue sous le nom de phase catastrophique. Dans cette troisième phase P3, la courbe 140 est sensiblement convexe et l'usure en dépouille augmente très fortement.

Pour déterminer si l'usure en dépouille d'un outil est trop importante, on connaît un procédé de surveillance de l'usure en dépouille déjà décrit en référence à la figure 3. Or, un tel procédé ne permet pas de savoir si l'usure en dépouille de l'outil de coupe est entrée ou non dans une phase catastrophique d'augmentation. Or, à partir de son entrée en phase catastrophique d'augmentation de l'usure en dépouille, la face de dépouille de l'outil de coupe peut se dégrader très rapidement et endommager la pièce usinée.

Il existe donc un besoin pour un nouveau procédé d'évaluation de l'usure d'un outil de coupe.

Le présent exposé concerne également un procédé d'évaluation de l'usure d'une face de dépouille d'un outil de coupe, caractérisé en ce que :

- au cours d'un usinage d'une pièce effectué par l'outil de coupe, on mesure en temps réel au moins une grandeur représentative d'un effort ou d'un déplacement de l'outil de coupe par rapport à ladite pièce ;
- on détermine le début d'une phase catastrophique d'augmentation de ladite usure en détectant un changement brutal dans la variation globale de ladite au moins une grandeur en fonction du temps.

Une grandeur représentative d'un effort ou d'un déplacement est une grandeur dont l'évolution traduit ou suit l'évolution de l'effort ou du déplacement. La grandeur représentative peut être l'effort ou le déplacement lui-même. Alternativement ou en complément, la grandeur représentative peut être obtenue par calcul à partir de l'effort ou du déplacement, par exemple par des opérations de dérivation ou d'intégration ou par l'application d'un filtre. Dans ce dernier cas, le filtrage peut avoir pour objectif de lisser la grandeur, de supprimer le bruit, d'exacerber les variations de la grandeur, ou autre, notamment afin d'obtenir la variation globale de la grandeur. La grandeur représentative peut aussi être une grandeur corrélée à l'effort ou au déplacement, de manière implicite ou explicite. La grandeur représentative n'est pas n'importe quelle grandeur, elle n'est pas un simple paramètre de l'environnement de l'usinage. La grandeur représentative est une grandeur qui donne une information sur l'évolution de l'usinage, c'est-à-dire une grandeur dont l'évolution est impactée par l'usinage. Ainsi, une grandeur représentative d'un effort ou d'un déplacement peut être, entre autres, une vitesse, une accélération, une énergie, une puissance, un couple, des vibrations, une température (notamment la température au voisinage de l'arête de coupe), un courant électrique (par exemple le courant de commande de l'outil de coupe), une tension, un signal de mesure acoustique, etc., ou encore, par exemple une grandeur issue d'au moins l'une des précédentes par le calcul.

Mesurer une grandeur en temps réel signifie que la mesure de la grandeur est effectuée sans attente, au fur et à mesure de l'évolution de cette grandeur au cours de l'usinage. La mesure en temps réel peut fournir une valeur de la grandeur mesurée à tout instant et dès que cette valeur est disponible. La grandeur peut être mesurée en continu ou non. Dans le cas où elle est mesurée de manière discrète, la fréquence de mesure est suffisamment élevée pour rendre compte fidèlement de l'évolution de la grandeur.

La variation globale d'une grandeur désigne une information traduisant les variations lentes de la grandeur, c'est-à-dire une information représentative ou fonction seulement de l'évolution de la valeur moyenne de la grandeur et éventuellement de l'évolution des harmoniques de plus basses fréquences. Par exemple, cette information est calculée sur un intervalle de temps d'une amplitude suffisante pour faire apparaître les variations lentes du signal. La variation globale peut être une valeur lissée ou moyennée de la grandeur. La variation globale d'une grandeur, par opposition avec la grandeur elle-même, ne comprend pas de fluctuations rapides, que ces fluctuations rapides soient un bruit de mesure ou qu'elles traduisent une vibration de l'outil de coupe et/ou de la pièce. En particulier, la variation globale est dépourvue des fluctuations rapides qui sont uniformes tout au long ou au cours d'une partie utile de la mesure de grandeur.

On appelle changement brutal dans la variation globale d'une grandeur un changement que l'on peut caractériser par un point remarquable : extremum, point de rupture de pente, point d'inflexion, singularité, discontinuité, etc. Le changement brutal peut résulter en une augmentation ou une diminution de la variation globale de la grandeur observée.

Les inventeurs de la présente invention ont remarqué qu'il existe une corrélation, lors de l'usinage d'une pièce, entre un changement brutal dans la variation globale d'une grandeur représentative d'un effort ou d'un déplacement de l'outil de coupe par rapport à la pièce et l'entrée de l'usure en dépouille VB, caractérisant l'usure de la face de dépouille de l'outil de coupe, dans une phase catastrophique d'augmentation. Le procédé objet du présent exposé tire parti de cette corrélation pour déterminer le début d'une phase catastrophique d'augmentation de l'usure de la face de dépouille d'un outil de coupe. Grâce un tel procédé, il est possible de connaître l'instant d'entrée en phase catastrophique. En fonction de cet instant, il est possible d'arrêter l'usinage avant que l'usure de la face de dépouille de l'outil de coupe ne soit préjudiciable pour la géométrie ou l'intégrité de la pièce. L'outil de coupe peut être changé avant qu'on n'observe d'endommagement de la pièce usinée.

De plus, un tel procédé ne nécessite pas d'étape de détermination de seuil. Son application est donc simple et rapide.

Dans certains modes de réalisation, le changement brutal est un point de rupture de pente. L'étape de détermination du début de phase catastrophique s'effectue donc en détectant un point de rupture de pente dans la courbe de la variation globale de la grandeur, ce qui traduit un changement brutal dans la variation globale de ladite grandeur. On rappelle qu'un point de rupture de pente est un point séparant deux portions sensiblement affines (ou deux portions de variation globale sensiblement affine) d'une courbe, les deux portions ayant des coefficients directeurs différents. Dans le cadre du présent procédé, un point de rupture de pente est un élément facile à détecter et fournit sans ambiguïté une indication de variations intensifiées de la grandeur mesurée.

Dans certains modes de réalisation, le changement brutal est un point d'inflexion. L'étape de détermination du début de phase catastrophique s'effectue donc en détectant un point d'inflexion dans la courbe de la variation globale de la grandeur, ce qui traduit un changement brutal dans la variation globale de ladite grandeur. On rappelle qu'un point d'inflexion est un point d'une courbe où la courbe traverse sa tangente.

Dans certains modes de réalisation du procédé précédemment décrit :

- au cours d'un usinage d'une pièce effectué par l'outil de coupe, on mesure en temps réel au moins deux grandeurs représentatives d'un effort ou d'un déplacement de l'outil de coupe par rapport à ladite pièce ;
- on détermine le début d'une phase catastrophique d'augmentation de ladite usure en détectant un changement brutal dans la variation globale d'au moins deux desdites grandeurs en fonction du temps.

En se basant sur les variations globales de deux grandeurs pour déterminer un début de phase catastrophique d'augmentation de l'usure, de tels modes de réalisation du procédé présentent une redondance qui permet de déterminer ledit début de manière plus fiable grâce à une limitation des fausses déterminations, c'est-à-dire des déterminations pour lesquelles les variations globales d'une grandeur ne seraient pas cohérentes avec les variations globales des autres grandeurs ; les fausses déterminations peuvent avoir diverses origines, parmi lesquelles des pannes de moyens de mesure ou une autre anomalie de l'outil de coupe ou de la pièce.

Dans certains modes de réalisation, les grandeurs sont choisies entre un effort et un déplacement de l'outil de coupe par rapport à la pièce.

Dans certains modes de réalisation, les efforts et déplacements sont choisis parmi l'effort de coupe exercé par l'outil de coupe sur la pièce, l'effort axial exercé par l'outil de coupe sur la pièce, l'effort radial exercé par l'outil de coupe sur la pièce, le déplacement axial de l'outil de coupe par rapport à la pièce et le déplacement de coupe de l'outil de coupe par rapport à la pièce. Certaines de ces grandeurs étant généralement déjà mesurées lors des usinages, l'application du procédé peut ne nécessiter aucun moyen de mesure supplémentaire ; un tel procédé s'avère donc peu coûteux.

Dans certains modes de réalisation, la détermination du début de la phase catastrophique est effectuée en temps réel. Dans de tels modes de réalisation, les mesures de grandeurs sont traitées directement, au fur et à mesure de leur acquisition en temps réel. Ainsi, l'usinage peut être arrêté avant que l'usure en dépouille de l'outil n'augmente trop et que l'outil n'endommage la pièce usinée.

Le présent exposé concerne également un programme d'ordinateur comportant des instructions pour l'exécution des étapes du procédé d'évaluation précédemment décrit lorsque ledit programme est exécuté par un ordinateur.

Le présent exposé concerne également un support d'enregistrement lisible par un ordinateur sur lequel est enregistré un programme d'ordinateur comprenant des instructions pour l'exécution des étapes du procédé d'évaluation précédemment décrit.

Le présent exposé concerne également un dispositif d'évaluation de l'usure d'une face de dépouille d'un outil de coupe pour l'usinage d'une pièce, caractérisé en ce qu'il comprend des moyens de mesure en temps réel d'au moins une grandeur représentative d'un effort ou d'un déplacement de l'outil par rapport à la pièce au cours d'un usinage de ladite pièce effectué par l'outil, et des moyens de détermination du début d'une phase catastrophique d'augmentation de ladite usure, les moyens de détermination étant configurés pour indiquer le début de la phase catastrophique d'augmentation de ladite usure en détectant un changement brutal dans la variation globale de ladite au moins une grandeur en fonction du temps.

Un tel dispositif permet de déterminer si l'outil de coupe se trouve dans une phase catastrophique d'augmentation de l'usure de sa face de dépouille, sans avoir à calculer des seuils de grandeurs équivalentes.

BREVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :

- la figure 1A, déjà décrite, représente une machine de coupe en cours d'usinage ;
- la figure 1B, déjà décrite, est une vue en perspective selon la direction B de la figure 1A ;
- la figure 2, déjà décrite, est une vue de la face de dépouille de l'outil de la figure 1 dans la direction II de la figure 1 ;
- la figure 3, déjà décrite, représente schématiquement un procédé de l'art antérieur utilisant une grandeur observée pour déterminer l'usure de manière indirecte ;
- la figure 4 illustre l'évolution de l'usure en dépouille maximale en fonction de la longueur de coupe observée et des exemples de courbes des première et deuxième fonctions utilisées dans le procédé faisant l'objet du présent exposé ;
- la figure 5, déjà décrite, illustre schématiquement l'évolution de l'usure en dépouille VB en fonction du temps de coupe ;
- la figure 6 représente un ensemble de mesures de grandeurs pour différentes valeurs de l'usure en dépouille maximale, en phase linéaire et en phase catastrophique ;
- la figure 7 illustre les différents régimes de variation globale d'une grandeur mesurée pendant l'usinage, lors de la phase linéaire d'usure de l'outil de coupe ;
- la figure 8 représente la détection d'un changement brutal sur une mesure d'un effort, lors de la phase catastrophique d'usure de l'outil de coupe.

DESCRIPTION DETAILLEE DE L'INVENTION

Dans le mode de réalisation qui sera décrit dans la suite, on applique le procédé de détermination selon l'invention à un outil de coupe du type précédemment décrit et utilisé pour le tournage du TA6V (alliage Ti Al 6 V, appellation selon la norme française AFNOR ; AMS 4928 selon la norme américaine ASTM). On choisit de caractériser l'usure de la face de dépouille de l'outil de coupe par l'usure en dépouille maximale VBmax. Cependant, la présente invention ne s'applique pas seulement au tournage ni seulement au TA6V et une autre longueur caractéristique que l'usure en dépouille maximale VBmax peut être choisie.

La figure 4 montre la courbe représentative 40 de l'évolution de l'usure en dépouille maximale VBmax en fonction de la longueur de coupe Lc observée, c'est-à-dire la longueur de coupe constatée pendant l'usinage et dépendant du temps. La longueur de coupe Lc est lié au temps de coupe t selon une formule dépendant du type d'usinage. Par exemple, dans le cas du tournage, on a la relation $Lc = \dfrac{Dc\,\pi\,Lu}{fz}$, où Lu est la longueur usinée selon la direction d'avance ($Lu = Vf \times t$, avec Vf la vitesse d'avance et t le temps). La longueur de coupe Lc est donc une variable dépendant du temps. L'expression de toutes les grandeurs en fonction de la longueur de coupe Lc plutôt qu'en fonction du temps t permet notamment de ne pas tenir compte d'éventuelles interruptions dans le déroulement de l'usinage.

Dans toute la suite, on désigne par « point » d'une courbe un point d'une des courbes 40, 41, 42 qui est matérialisé par un symbole tel qu'un carré droit, un losange (carré incliné) ou un triangle. En l'occurrence, selon cette acception, les courbes 40, 41, 42 comportent chacune huit points comptés dans le sens des longueurs de coupe Lc croissantes (de gauche à droite sur la figure 4). Pour la courbe 40, ces points correspondent à des mesures expérimentales.

Sur la courbe 40, on distingue trois phases successives de l'évolution de l'usure en dépouille maximale VBmax. Lors d'une première phase, entre les deux premiers points de la courbe 40, la courbe 40 est sensiblement concave et l'usure en dépouille augmente fortement. Cette première phase, appelée phase d'initiation, correspond au rodage de l'outil de coupe. Ensuite, environ entre le deuxième point et le cinquième point, l'usure en dépouille maximale VBmax entre dans une deuxième phase, appelée phase linéaire, où elle suit une croissance sensiblement linéaire et moins forte que lors de la première phase. Enfin, dans une troisième phase, environ entre le cinquième point et le huitième point, l'usure en dépouille maximale entre dans une phase connue sous le nom de phase catastrophique. Dans cette troisième phase, la courbe 40 est sensiblement convexe et l'usure en dépouille augmente plus fortement que dans la phase linéaire.

Les trois phases d'évolution décrites ci-dessus se retrouvent dans des essais réalisés avec d'autres matériaux et/ou avec d'autres types d'usinages.

Dans le présent exemple, la courbe 40 est obtenue à titre de courbe témoin, par des mesures individuelles faites selon un procédé quelconque de l'art antérieur. Par ailleurs, on applique au présent tournage le procédé selon un mode de réalisation de l'invention.

Pour ce faire, on emploie une première fonction f1 et une deuxième fonction f2 de formes respectives :

$$f1(Vc, fz, Ec, t) = 10^{A1} Vc^{B1} fz^{C1} Ecc^{D1}$$

$$f2(Vc, fz, Fr, t) = 10^{A2} 10^{[B2 + C2 \log(fz) + D2 \log(Vc)]} . \log(Frc)$$

où Vc est la vitesse de coupe, fz l'avance par dent par tour, Ecc l'énergie de coupe cumulée, Frc l'effort radial cumulé et A1, B1, C1, D1, A2, B2, C2, D2 huit constantes. Les variables peuvent être connues (par exemple, la vitesse de coupe peut être fixée, qu'elle soit constante ou variable) ou mesurées à l'aide de capteurs.

L'usure en dépouille maximale VBmax dépend de l'historique de la coupe. Le fait d'employer des grandeurs cumulées telles que l'effort radial cumulé Frc ou l'énergie de coupe cumulée Ecc dans les expressions des première et deuxième fonctions f1 et f2 traduit la prise en compte de cet historique de coupe.

Par ailleurs, l'effort de coupe cumulé (cumul de Fc) ou le couple de coupe cumulé pourraient être utilisés à la place de l'énergie de coupe cumulée Ecc dans l'expression de la première fonction f1. En outre, l'effort axial cumulé (cumul de Fx) pourrait être utilisé à la place de l'effort radial cumulé Frc dans l'expression de la deuxième fonction f2. Tout ou partie des constantes A1, B1, C1, D1, A2, B2, C2, D2 serait adapté en conséquence. Au-delà, une grandeur quelconque associée à de tels efforts pourrait être utilisée dans les fonctions f1 et/ou f2. De telles grandeurs incluent, de manière non limitative, une énergie, une puissance, un couple, un courant électrique de commande ou une tension de commande (notamment le courant de broche), une température, des vibrations, toute grandeur obtenue à partir des précédentes par des opérations mathématiques (notamment dérivation et intégration), etc.

Dans les première et deuxième fonctions f1 et f2 du présent mode de réalisation, la profondeur de passe ap ne figure pas explicitement dans les expressions de f1 et f2 mais elle influence les efforts et énergies ; elle est donc indirectement prise en compte via l'énergie de coupe cumulée Ecc et l'effort radial cumulé Frc. La dépendance à la profondeur de passe ap pourrait toutefois être explicite.

Dans les première et deuxième fonctions f1 et f2, la dépendance au temps provient au moins de l'énergie de coupe Ec et de l'effort radial Fr, qui dépendent du temps, et du fait que l'énergie de coupe Ec et l'effort radial Fr sont intégrés par rapport au temps pour donner l'énergie de coupe cumulée Ecc et l'effort radial cumulé Frc. Les première et deuxième fonctions f1 et f2 dépendent donc du temps au moins à ce double titre. Par ailleurs, la vitesse de coupe Vc et l'avance par tour par dent fz peuvent également dépendre du temps.

La forme générale de la première fonction f1 permet de modéliser la première et la deuxième phase d'évolution de l'usure en dépouille maximale VBmax, ainsi qu'on peut le voir sur la figure 4. La courbe 41 représentant la première fonction f1 est en effet presque confondue, sur la phase d'initiation et la phase linéaire, avec la courbe 40 représentant l'évolution réelle de l'usure en dépouille maximale VBmax.

La forme générale de la deuxième fonction f2 permet de modéliser la troisième phase d'évolution de l'usure en dépouille maximale, ainsi qu'on peut le voir sur la figure 4. La courbe 42 représentant la deuxième fonction f2 est en effet très proche, sur cette troisième phase, de la courbe 40 représentant l'évolution réelle de l'usure en dépouille maximale VBmax.

Les constantes A1, B1, C1, D1, A2, B2, C2, D2 peuvent être déterminées par des essais de coupe, en faisant varier les paramètres Vc et fz et en mesurant Ecc, Frc et VBmax. Ce type de détermination de constantes est réalisé par l'homme du métier selon ses connaissances. Dans l'exemple de la figure 4, les valeurs des huit constantes A1, B1, C1, D1, A2, B2, C2, D2 sont comprises entre 0 et 10 en valeur absolue. Plus précisément, dans l'exemple de la figure 4, lesdites constantes peuvent prendre approximativement les valeurs suivantes : A1≈-5,2, B1≈1,5, C1≈0,6, D1≈0,3, A2≈-2,9, B2≈-0,74, C2≈-0,22, D2≈0,68.

L'usure en dépouille maximale VBmax en fonction de la longueur de coupe Lc peut donc être calculée par une fonction générale f de la forme : f = max (f1 ; f2), où f1 et f2 sont les fonctions précédemment définies, qui dépendent de variables dépendant du temps. Ainsi, on peut déduire de la figure 4 que f=f1 sur la phase d'initiation et la phase linéaire environ et que f=f2 sur la phase catastrophique environ. Le fait de prendre pour fonction générale f le maximum des première et deuxième fonctions f1 et f2 est non seulement conservatif, mais fournit de surcroît une modélisation en accord avec les essais expérimentaux et prenant en compte les variations de l'usure en dépouille maximale lors de chacune de ses phases d'évolution.

Dans d'autres configurations (matériaux et/ou usinage différents notamment), d'autres fonctions que f1 et f2 peuvent être utilisées afin d'approcher les résultats expérimentaux. Ainsi, les première et deuxième fonctions f1 et f2 peuvent avoir des expressions différentes, notamment des expressions qui dépendent du temps et de constantes déterminées expérimentalement. Les première et deuxième fonctions f1 et f2 peuvent également être remplacées par une seule expression, notamment incluant une fonction maximum ou minimum.

On a représenté, sur la figure 4, un seuil VBs. Le seuil VBs est ici un critère de rebut pour l'usure en dépouille maximale, c'est-à-dire que l'outil de coupe doit être mis au rebut dès que son usure en dépouille maximale VBmax dépasse le critère de rebut VBs. En pratique, VBs est généralement compris entre 0.2 mm et 0.3 mm.

Dans l'exemple de la figure 4, la courbe 42 représentative de la deuxième fonction f2 atteint le critère de rebut VBs pour une longueur de coupe Lc1. Le niveau d'usure de l'outil de coupe justifierait donc d'arrêter l'usinage à la longueur de coupe Lc1 pour changer l'outil.

Dans le présent mode de réalisation, la détermination de l'usure de la face de dépouille de l'outil de coupe, c'est-à-dire ici le calcul de l'usure en dépouille maximale VBmax par la fonction générale f, est effectuée en temps réel. L'usure en dépouille maximale VBmax est donc calculée au fur et à mesure de l'usinage et l'usinage peut être interrompu dès que le critère de rebut VBs est atteint par l'usure en dépouille calculée. Le risque de dépasser le critère de rebut est donc beaucoup plus limité que dans les procédés de l'art antérieur.

En variante, la détermination de l'usure de la face de dépouille de l'outil de coupe, c'est-à-dire ici le calcul de l'usure en dépouille maximale VBmax par la fonction générale f, peut être effectuée a posteriori. Les grandeurs nécessaires audit calcul, telles que l'effort radial Fr et l'énergie de coupe Ec, sont tout de même mesurées en temps réel.

Selon un autre mode de réalisation, le calcul de la longueur caractéristique, par exemple de l'usure en dépouille maximale VBmax, peut être effectué de manière prédictive, avant l'usinage, grâce à une fonction générale dont les arguments ne dépendent pas du temps. Par exemple, les phases d'initiation et linéaire de l'évolution de l'usure en dépouille peuvent être modélisées par une première fonction f1 dépendant de la longueur de coupe Lc, notamment de la forme :

$$f1(Vc, fz, Lc) = 10^{A1} Vc^{B1} fz^{C1} Lc^{D1}$$

où Vc est la vitesse de coupe, fz l'avance par tour par dent, Lc la longueur de coupe et A1, B1, C1, D1 quatre constantes. Les inventeurs ont constaté que, de manière surprenante, les constantes de cette première fonction ayant comme argument la longueur de coupe sont du même ordre de grandeur que les constantes A1 à D1 de la première fonction ayant comme argument l'énergie de coupe. Il existe donc une corrélation physique qui justifie le fonctionnement du modèle prédictif alors même que, comme indiqué précédemment, l'usure en dépouille dépend de l'historique de l'usinage de l'outil.

Un mode de réalisation du procédé d'évaluation de l'usure d'une face de dépouille d'un outil de coupe selon un autre aspect de l'invention va maintenant être décrit en référence à un outil de coupe du type précédemment décrit et utilisé pour le tournage du TA6V. On choisit de caractériser l'usure de la face de dépouille de l'outil de coupe par l'usure en dépouille maximale VBmax. Cependant, la présente invention ne s'applique pas seulement au tournage ni seulement au TA6V et une autre longueur caractéristique que l'usure en dépouille maximale VBmax peut être choisie.

Pendant un usinage d'une pièce réalisé par l'outil de coupe, on mesure l'effort de coupe Fc exercé par l'outil de coupe sur la pièce, l'effort axial Fx exercé par l'outil de coupe sur la pièce, l'effort radial Fr exercé par l'outil de coupe sur la pièce, le déplacement axial Dx de l'outil de coupe par rapport à la pièce et le déplacement de coupe de l'outil de coupe par rapport à la pièce. Les évolutions de ces cinq grandeurs en fonction du temps sont représentées, pour plusieurs valeurs de l'usure en dépouille maximale de l'outil de coupe, sur la figure 6.

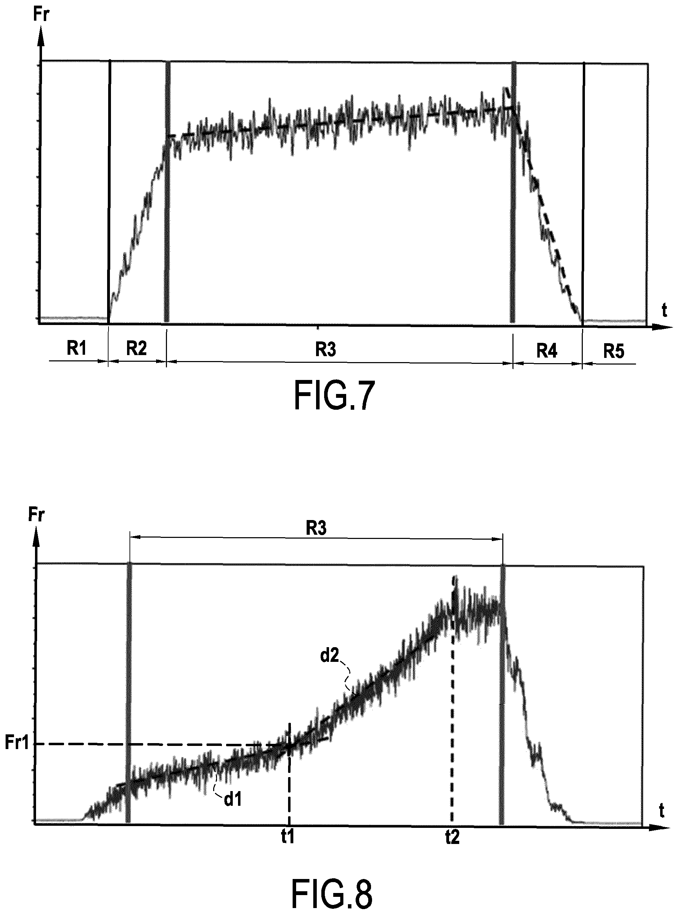

Les mesures de grandeurs représentées sur la figure 6 évoluent en fonction du temps selon cinq régimes successifs qui sont schématisés sur la figure 7 dans le cas de l'effort radial Fr en phase linéaire. Un premier régime R1 est un régime de repos, où l'outil de coupe n'est pas en contact avec la pièce. Dans ce premier régime R1, les efforts Fc, Fx, Fr exercés par l'outil de coupe sur la pièce sont nuls et les déplacements Dc, Dx peuvent être constants (aux éventuelles vibrations près). Lors d'un deuxième régime R2, qui est un régime transitoire, l'outil de coupe pénètre dans la pièce jusqu'à sa position de coupe. Dans un troisième régime R3, l'outil de coupe effectue la coupe proprement dite ; lorsque l'usure en dépouille de l'outil de coupe n'est pas en phase catastrophique, la grandeur présente, au cours du troisième régime R3, une évolution régulière sans changement brutal. En particulier, sa variation globale peut être sensiblement constante (cf. par exemple Fc, Fx, Fr, Dc) ou sensiblement linéaire (cf. par exemple Dx). Dans un quatrième régime R4, l'outil de coupe s'éloigne de la pièce jusqu'à s'en dissocier complètement. L'outil de coupe atteint ainsi un cinquième régime R5, qui est un régime de repos semblable au premier régime R1. Sur la figure 6, chaque graphe représente la mesure d'une grandeur pendant la succession de ces cinq régimes.

Après la mesure de grandeurs, le procédé peut inclure une étape optionnelle de filtrage ou de calcul à partir d'une ou plusieurs des mesures obtenues. Cette étape de filtrage ou de calcul peut être, en particulier, une étape de prétraitement visant à obtenir la variation globale de la grandeur, ou plus généralement à faciliter la détection d'un changement brutal qui sera effectuée par la suite. Elle peut comprendre l'application d'un filtre de réduction du bruit (filtre passe-bas) ou tout autre type de transformation.

Au cours du présent procédé, on détermine le début d'une phase catastrophique d'augmentation de l'usure de la face de dépouille de l'outil de coupe en détectant un changement brutal dans la variation globale d'au moins une des cinq grandeurs précitées en fonction du temps. Dans la mesure où les deuxième et quatrième régimes R2, R4 sont transitoires, la détection dudit changement brutal s'effectue de préférence au cours du troisième régime R3.

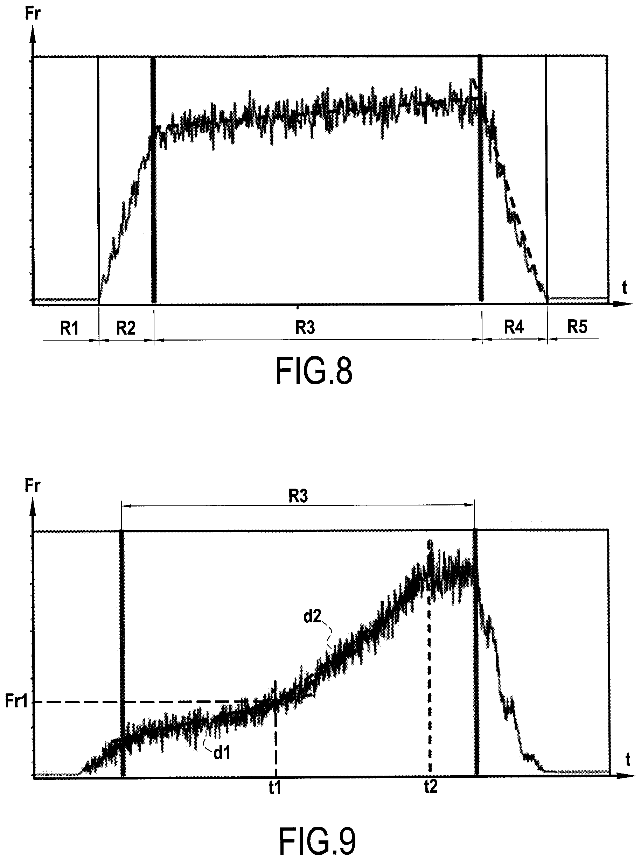

Dans le présent mode de réalisation, le changement brutal est recherché sous la forme d'un point de rupture de pente. La figure 8 montre un exemple de détection d'un tel point de rupture de pente traduisant un changement brutal dans la variation globale de l'effort radial Fr et une entrée en phase catastrophique. Ainsi que le montrent les droites d1, d2 en pointillés, la courbe représentant l'évolution de l'effort radial Fr au cours du régime R3 suit, globalement, une première droite d1 jusqu'à un temps t1 puis une deuxième droite d2 à partir du temps t1 et jusqu'au temps t2. Le temps t2 est l'abscisse d'un extremum de l'effort radial Fr, en l'occurrence d'un maximum. Le temps t1 est l'abscisse du point d'intersection des droites d1 et d2 et définit l'instant de rupture de pente, donc l'instant de changement brutal dans les variations de l'effort radial Fr.

Les droites d1 et d2 traduisent la variation globale de l'effort radial Fr au cours du régime R3. L'établissement des droites d1 et d2 peut être réalisé par tous les moyens à la disposition de l'homme du métier, par exemple par des régressions linéaires. D'autres caractérisations de la variation globale de l'effort radial sont possibles ; dans le cas présent, des droites obtenues par régression linéaires sont particulièrement propices à la détection d'un point de rupture de pente.

Sur la figure 6, pour des valeurs de l'usure en dépouille maximale VBmax strictement inférieures à 0,185 mm, aucun changement brutal dans les variations des grandeurs n'est détecté. On observe l'apparition d'un changement brutal dans les variations globales de l'effort axial Fx, de l'effort radial Fr, du déplacement de coupe Dc et du déplacement axial Dx à partir de VBmax=0,185 mm. Pour VBmax=0,185 mm et VBmax=0,22 mm, ces changements brutaux sont plus particulièrement signalés par des cercles en pointillés. Le début d'une phase catastrophique P3 d'augmentation de l'usure de la face de dépouille de l'outil de coupe se produit donc dès VBmax=0,185 mm. Bien qu'il n'apparaisse pas dans le cas de la figure 6, le changement brutal peut également être repéré sur l'évolution de l'effort de coupe Fc pour d'autres types d'usinages.

Dans le présent mode de réalisation, le début de la phase catastrophique P3 est détecté sur la base d'un changement brutal de la variation globale d'une seule grandeur. Toutefois, en variante, pour une fiabilité accrue, il est possible de confirmer cette détection par la détection d'un changement brutal dans la variation globale d'une deuxième grandeur, distincte, et de ne déterminer le début de la phase catastrophique P3 qu'à partir du moment où un changement brutal a été détecté aussi dans la variation globale de la deuxième grandeur.

En outre, bien que le présent mode de réalisation ait été décrit avec un changement brutal correspondant à un point de rupture de pente, d'autres types de changements brutaux peuvent être détectés. Dans le cas où l'on détecte des changements brutaux dans les variations globales d'au moins deux grandeurs différentes, il n'est pas nécessaire que les changements brutaux détectés soient tous de même nature.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de détermination de l'usure d'une face de dépouille (12) d'un outil de coupe (10), dans lequel ladite usure est déterminée au moyen d'une fonction générale (f) calculant une longueur caractéristique (VB, VBmax) de ladite usure en fonction d'au moins une variable représentative des conditions opératoires d'un usinage effectué par l'outil de coupe, et comprenant les étapes de :

   - calcul d'une première valeur de ladite longueur caractéristique par une première fonction (f1, 41) ;
   - calcul d'une deuxième valeur de ladite longueur caractéristique par une deuxième fonction (f2, 42) ;

- calcul de ladite fonction générale (f, 40) comme maximum de ladite première valeur et de ladite deuxième valeur.

2. Procédé de détermination selon la revendication 1, dans lequel la détermination de ladite usure est effectuée en temps réel.

3. Procédé de détermination selon la revendication 1 ou 2, dans lequel la première fonction et/ou la deuxième fonction dépend de constantes (A1, B1, C1, D1, A2, B2, C2, D2) déterminées par des essais d'usinage.

4. Procédé de détermination selon l'une quelconque des revendications 1 à 3, dans lequel la longueur caractéristique de l'usure de la face de dépouille est calculée en fonction de la vitesse de coupe (Vc), l'avance par tour par dent (fz), la profondeur de passe (ap), l'énergie de coupe (Ec) et l'effort radial (Fr).

5. Procédé de détermination selon l'une quelconque des revendications 1 à 4, dans lequel la première fonction (f1) dépend du temps t et la première fonction est de la forme :

$$f1(Vc, fz, Ec, t) = 10^{A1} Vc^{B1} fz^{C1} Ecc^{D1}$$

où Vc est la vitesse de coupe, fz l'avance par tour par dent, Ecc l'énergie de coupe cumulée et A1, B1, C1, D1 quatre constantes.

6. Procédé de détermination selon l'une quelconque des revendications 1 à 5, dans lequel la deuxième fonction (f2) dépend du temps t et la deuxième fonction est de la forme :

$$f2(Vc, fz, Fr, t) = 10^{A2} 10^{[B2 + C2 \log(fz) + D2 \log(Vc)] \cdot \log(Frc)}$$

où Vc est la vitesse de coupe, fz l'avance par tour par dent, Frc l'effort radial cumulé et A2, B2, C2, D2 quatre constantes.

7. Procédé de détermination selon la revendication 1, dans lequel la première fonction (f1) dépend de la longueur de coupe Lc et la première fonction est de la forme :

$$f1(Vc, fz, Lc) = 10^{A1} Vc^{B1} fz^{C1} Lc^{D1}$$

où Vc est la vitesse de coupe, fz l'avance par tour par dent, Lc la longueur de coupe et A1, B1, C1, D1 quatre constantes.

8. Programme d'ordinateur comportant des instructions pour l'exécution des étapes du procédé de détermination selon l'une quelconque des revendications 1 à 7 lorsque ledit programme est exécuté par un ordinateur.

9. Support d'enregistrement lisible par un ordinateur sur lequel est enregistré un programme d'ordinateur comprenant des instructions pour l'exécution des étapes du procédé de détermination selon l'une quelconque des revendications 1 à 7.

10. Dispositif de détermination de l'usure d'une face de dépouille d'un outil de coupe pour l'usinage d'une pièce, comprenant des moyens de détermination d'une longueur caractéristique de ladite usure, lesdits moyens de détermination prenant en compte au moins une variable représentative des conditions opératoires d'un usinage effectué par l'outil de coupe, et lesdits moyens de détermination étant configurés pour :

- calculer une première valeur de ladite longueur caractéristique par une première fonction (f1, 41) ;
- calculer une deuxième valeur de ladite longueur caractéristique par une deuxième fonction (f2, 42) ;
- calculer ladite longueur caractéristique comme maximum de ladite première valeur et de ladite deuxième valeur.

**Patentansprüche**

1. Verfahren zur Bestimmung des Verschleißes einer Flanke (12) eines Schneidwerkzeugs (10), wobei der Verschleiß mittels einer allgemeinen Funktion (f) bestimmt wird, die eine charakteristische Länge (VB, VBmax) des Verschleißes in Abhängigkeit von mindestens einer Variablen berechnet, die für die operativen Bedingungen einer Bearbeitung repräsentativ ist, die von dem Schneidwerkzeug durchgeführt wird, und das die folgenden Schritte umfasst:

    - Berechnen eines ersten Werts der charakteristischen Länge durch eine erste Funktion (f1, 41);
    - Berechnen eines zweiten Werts der charakteristischen Länge durch eine zweite Funktion (f2, 42);
    - Berechnen der allgemeinen Funktion (f, 40) als Maximum des ersten Werts und des zweiten Werts.

2. Bestimmungsverfahren nach Anspruch 1, wobei die Bestimmung des Verschleißes in Echtzeit durchgeführt wird.

3. Bestimmungsverfahren nach Anspruch 1 oder 2, wobei die erste Funktion und/oder die zweite Funktion von durch Bearbeitungstests bestimmten Konstanten (A1, B1, C1, D1, A2, B2, C2, D2) abhängt.

4. Bestimmungsverfahren nach einem der Ansprüche 1 bis 3, wobei die charakteristische Länge des Verschleißes der Flanke in Abhängigkeit von der Schneidgeschwindigkeit (Vc), dem Vorschub je Umdrehung je Zahn (fz), der Schneidtiefe (ap), der Schneidenergie (Ec) und der Radialkraft (Fr) berechnet wird.

5. Bestimmungsverfahren nach einem der Ansprüche 1 bis 4, wobei die erste Funktion (f1) von der Zeit t abhängt und die erste Funktion folgendermaßen lautet:

$$f1(Vc, fz, Ec, t) = 10^{A1}Vc^{B1}fz^{C1}Ecc^{D1}$$

wobei Vc die Schneidgeschwindigkeit, fz der Vorschub je Umdrehung je Zahn, Ecc die kumulierte Schneidenergie ist und A1, B1, C1, D1 vier Konstanten sind.

6. Bestimmungsverfahren nach einem der Ansprüche 1 bis 5, wobei die zweite Funktion (f2) von der Zeit t abhängt und die zweite Funktion folgendermaßen lautet:

$$f2(Vc, fz, Fr, t) = 10^{A2}10^{[B2+C2\log(fz)+D2\log(Vc)]}.\log(Frc)$$

wobei Vc die Schneidgeschwindigkeit, fz der Vorschub je Umdrehung je Zahn, Frc die kumulierte radiale Kraft ist und A2, B2, C2, D2 vier Konstanten sind.

7. Bestimmungsverfahren nach Anspruch 1, wobei die erste Funktion (f1) von der Schneidlänge Lc abhängt und die erste Funktion folgendermaßen lautet:

$$f1(Vc, fz, Lc) = 10^{A1}Vc^{B1}fz^{C1}Lc^{D1}$$

wobei Vc die Schneidgeschwindigkeit, fz der Vorschub je Umdrehung je Zahn, Lc die Schneidlänge ist und A1, B1, C1, D1 vier Konstanten sind.

8. Rechnerprogramm, aufweisend Befehle für die Ausführung der Schritte des Bestimmungsverfahrens nach einem der Ansprüche 1 bis 7, wenn das Programm von einem Rechner ausgeführt wird.

9. Rechnerlesbares Speichermedium, auf dem ein Rechnerprogramm gespeichert ist, das Befehle für die Ausführung der Schritte des Bestimmungsverfahrens nach einem der Ansprüche 1 bis 7 umfasst.

10. Vorrichtung zur Bestimmung des Verschleißes einer Flanke eines Schneidwerkzeugs für die Bearbeitung eines Teils, umfassend Mittel zur Bestimmung einer charakteristischen Länge des Verschleißes, wobei die Bestimmungsmittel mindestens eine Variable berücksichtigen, die für die operativen Bedingungen einer Bearbeitung repräsentativ ist, die von dem Schneidwerkzeug durchgeführt wird, und die Bestimmungsmittel ausgelegt sind, um:

- einen ersten Wert der charakteristischen Länge durch eine erste Funktion (f1, 41) zu berechnen;
- einen zweiten Wert der charakteristischen Länge durch eine zweite Funktion (f2, 42) zu berechnen;
- die charakteristische Länge als Maximum des ersten Werts und des zweiten Werts zu berechnen.

**Claims**

1. A determination method for determining the wear of a flank (12) of a cutter tool (10), wherein said wear is determined by means of a general function ($\underline{f}$) calculating a characteristic length (VB, VBmax) of said wear as a function of at least one variable representative of operating conditions of machining performed by the cutter tool, the method comprising the steps of:

   • calculating a first value of said characteristic length by a first function (f1, 41);
   • calculating a second value of said characteristic length by a second function (f2, 42); and
   • calculating said general function ($\underline{f}$, 40) as the maximum of said first value and said second value.

2. A determination method according to claim 1, wherein said wear is determined in real time.

3. A determination method according to claim 1 or claim 2, wherein the first function and/or the second function depends on constants (A1, B1, C1, D1, A2, B2, C2, D2) determined by machining tests.

4. A determination method according to any one of claims 1 to 3, wherein the characteristic length of the wear of the flank is calculated as a function of cutting speed (Vc), feed per revolution and per tooth (fz), depth of cut (ap), cutting energy (Ec), and radial force (Fr).

5. A determination method according to any one of claims 1 to 4, wherein the first function (f1) depends on time $\underline{t}$ and the first function is of the form:

$$f1\left(Vc, fz, Ec, t\right) = 10^{A1} Vc^{B1} fz^{C1} Ec c^{D1}$$

   where Vc is the cutting speed, fz the feed per revolution and per tooth, Ecc the accumulated cutting energy, and A1, B1, C1, and D1 are four constants.

6. A determination method according to any one of claims 1 to 5, wherein the second function (f2) depends on time $\underline{t}$, and the second function is of the form:

$$f2\left(Vc, fz, Fr, t\right) = 10^{A2} 10^{\left[B2 + C2\log(fz) + D2\log(Vc)\right] \cdot \log(Frc)}$$

   where Vc is the cutting speed, fz the feed per revolution and per tooth, Frc the accumulated radial force, and A2, B2, C2, and D2 are four constants.

7. A determination method according to claim 1, wherein the first function (f1) depends on cutting length Lc and the first function is of the form:

$$f1\left(Vc, fz, Lc\right) = 10^{A1} Vc^{B1} fz^{C1} Lc^{D1}$$

   where Vc is the cutting speed, fz the feed per revolution and per tooth, Lc the cutting length, and A1, B1, C1, and D1 are four constants.

8. A computer program including instructions for executing steps of the determination method according to any one of claims 1 to 7 when said program is executed by a computer.

9. A computer readable data medium including a computer program comprising instructions for executing steps of the determination method according to any one of claims 1 to 7.

**10.** A device for determining the wear of a flank of a cutter tool for machining a part, the device having means for determining a characteristic length of said wear, said determination means taking account of at least one variable representative of the operating conditions of machining performed by the cutter tool, and said determination means being configured to:

- calculate a first value of said characteristic length by a first function (f1, 41);
- calculate a second value of said characteristic length by a second function (f2, 42); and
- calculate said characteristic length as the maximum of said first value and said second value.

FIG.1A

FIG.1B

FIG.2

FIG.3

FIG.4

FIG.5

FIG.6

FIG.7

FIG.8

FIG.8

FIG.9